# EUROPÄISCHE PATENTSCHRIFT

(11) **EP 1 304 272 B1**
(45) Veröffentlichungstag und Bekanntmachung des Hinweises auf die Patenterteilung: **03.11.2004**
(21) Anmeldenummer: 02019527.7
(22) Anmeldetag: 31.08.2002
(51) Int. Cl.: B60T 11/06

(54) **Einstellvorrichtung für Radbremsseile einer Fussfeststellbremse**
Adjusting device for brake cables of a foot-actuated parking brake
Dispositif pour ajuster câbles d'un frein de stationnement à pédale

(30) Priorität: 19.10.2001 DE 10151766
(43) Veröffentlichungstag der Anmeldung: 23.04.2003
(73) Patentinhaber: Dr.Ing. h.c.F. Porsche Aktiengesellschaft, 70435 Stuttgart (DE)
(72) Erfinder: Grundke, Edgar, 71254 Ditzingen (DE)

(56) Entgegenhaltungen:
- WO-A-95/19283
- DE-A- 3 741 529
- DE-C- 4 401 084
- FR-A- 645 291
- US-A- 2 912 072
- US-A- 4 569 112

## Beschreibung

Die Erfindung bezieht sich auf eine Einstellvorrichtung für Radbremsseile einer Fußfeststellbremse nach dem Oberbegriff des Patentanspruchs 1.

Aus der US 2,912,072 ist eine Einstellvorrichtung für Bremsseile bekannt, welche einen Bügel umfaßt, in dem an jeder Seite ein Bremsseil einhängbar ist. Ein Festsetzen des Bügels erfolgt auf einer Zugstange mittels einer Spannmutter, die entsprechend einer Seillängung aufschraubbar ist.

Aufgabe der Erfindung ist es, eine Einstellvorrichtung für Radbremsseile einer Fußfeststellbremse zu schaffen, mit der ein Seillängenüberstand bzw. Toleranzen und eine Einstellung in einfacher Weise erfolgen kann.

Diese Aufgabe wird erfindungsgemäß durch die Merkmale des Patentanspruchs 1 gelöst. Weitere vorteilhafte Merkmale beinhalten die Unteransprüche.

Die mit der Erfindung hauptsächlich erzielten Vorteile stehen darin, daß unterschiedliche Längen der Bremsseile und Toleranzen bedingt durch den Einbau ins Fahrzeug kompensierbar sind. Dies ist erfolgt, indem ein Bügel der Einstellvorrichtung unter Zwischenschaltung eines verstellbaren Ausgleichselements an einem Abstützteil auf einer Zugstange über ein Federelement abgestützt gehalten wird. Das Ausgleichselement ist über eine Stellschraube in verschiedenen Schiefstellungen zum Abstützteil festsetzbar und korrespondierend zu diesem Abstützteil wird das Ausgleichselement auf der Zugstange verstellt und über eine Gewindemutter mit dieser verbunden.

Durch die Verstellmöglichkeit des Ausgleichselements können die tatsächlichen Längen der beiden Bremsseile berücksichtigt werden, so daß diese gespannt und ohne Lose im Bügel gehalten sind.

Damit das Ausgleichselement auf der Zugstange verschwenkt werden kann, ist in diesem ein sogenannter Führungsschlitz oder dgl. vorgesehen. Die Stellschraube ist in einem seitlichen Schlitz des Ausgleichselements angeordnet und dieses ist auf der Zugstange gegenüber dem Abstützteil begrenzt zu beiden Seiten der Zugstange in Schiefstellungen verschwenkbar. Hierdurch wird ein ausreichend großer Schwenkwinkel des Ausgleichselements nach beiden Seiten hin ermöglicht, damit mögliche unterschiedliche Seillängen aufzufangen sind.

Das Ausgleichselement weist einen ausgerundeten Rücken auf, der in einer bogenförmigen korrespondierenden Ausrundung des Abstützteiles angeordnet ist. Desweiteren ist der Bügel auf der Zugstange mittels der Gewindemutter gegen das Ausgleichselement verspannbar, welches eine dem Bügel zugerichtete Abstützfläche aufweist, welche einer innenliegenden korrespondierende weitere Abstützfläche gegenübersteht. Insbesondere ist der Bügel im Querschnitt U-profilförmig ausgeführt und das Ausgleichselement ist in diesem Profil angeordnet und stützt sich innenseitig an der weiteren Abstützfläche ab. Hierdurch ist eine feste Anordnung und Abstützung des Bügels in jeder voreingestellten Lage des Ausgleichselements gewährleistet.

Auf der Zugstange ist zusätzlich ein Federelement angeordnet, das beispielsweise aus einer Elastomerhülse besteht, welche zwischen einer sich an der Zugstange abstützenden Anschlagscheibe und dem Ausgleichselement auf der Zugstange angeordnet ist. Dieses Federelement bewirkt in vorteilhafter Weise, daß eine Pressung gegen das Ausgleichselement und somit gegen den Bügel und gegen die Gewindemutter auf der Zugstange erfolgen kann.

Ein Ausführungsbeispiel der Erfindung ist in den Zeichnungen dargestellt und wird im folgenden näher beschrieben.

Es zeigen:
- Fig. 1: eine Draufsicht auf eine Einstellvorrichtung mit auf einer Zugstange angeordnetem Federelement, Abstützteil, Ausgleichselement und Bügel für Bremsseile,
- Fig. 2: eine schaubildliche Darstellung der Einstellvorrichtung gem. Fig. 1 und

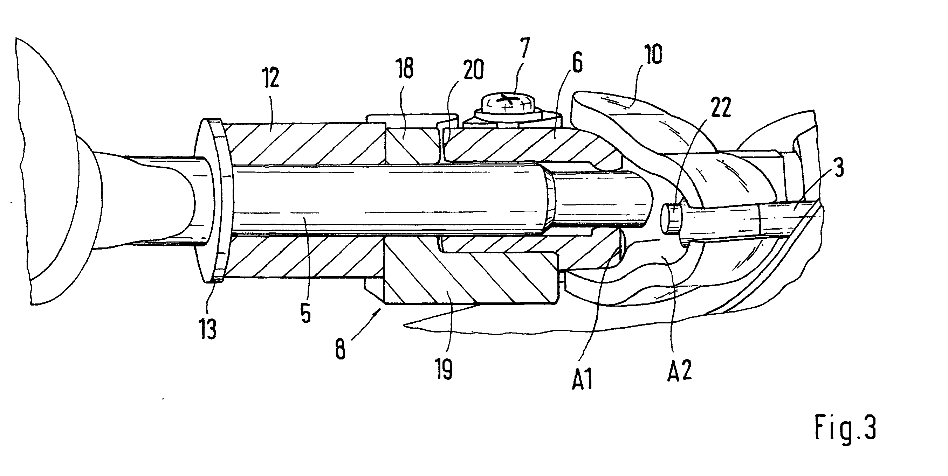

- Fig. 3: einen Schnitt durch die Einstellvorrichtung.

Die Einstellvorrichtung 1 ist für Bremsseile 2, 3 einer Fußfeststellbremse vorgesehen, die ein Bremspedal aufweist, das über einen Bowdenzug mit einer Umlenkeinrichtung versehen ist und welche mit einer Zugstange 5 verbunden wird, die die Einstellvorrichtung 1 aufweist.

Die Einstellvorrichtung 1 umfaßt im wesentlichen ein auf der Zugstange 5 angeordnetes Ausgleichselement 6, das über eine Stellschraube 7 mit einem Abstützteil 8 verbunden ist. Am freien Ende 9 der Zugstange 5 ist ein Bügel 10 angeordnet, der sich am Ausgleichselement 6 abstützt. Über eine Gewindemutter 11 am freien Ende a der Zugstange 5 wird die Einheit aus dem Bügel 10, dem Ausgleichselement 6 und dem Abstützteil 8 bestehend, gegen eine auf der Zugstange 5 angeordnete Elastomerfeder 12 oder einer gleichwirkenden Feder gedrückt, wobei die Feder 12 sich an eine Anschlagscheibe 13 anlegt bzw. abstützt.

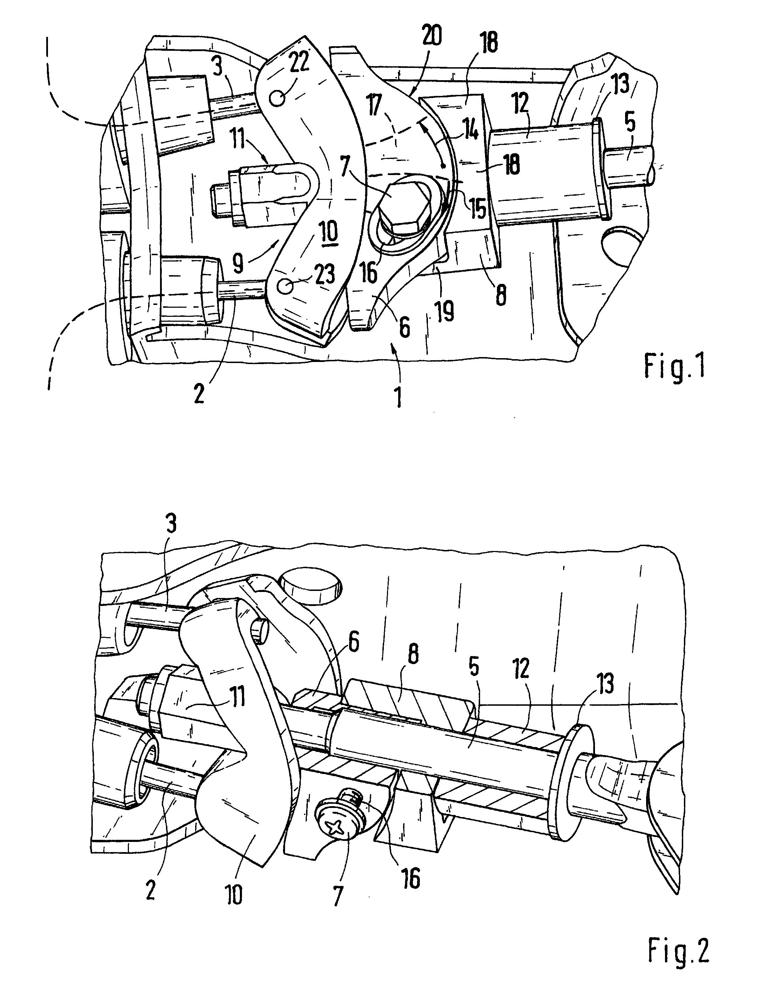

Zum Ausgleich von unterschiedlichen Längen der Bremsseile 2, 3 bzw. zum Ausgleich von Toleranzen kann nach dem Lösen der Gewindemutter 11 und der Spannschraube 7 das Ausgleichselement 6 in Pfeilrichtungen 14, 15 in sogenannte Schiefstellungen verschwenkt werden, wozu die Stellschraube 7 in einem seitlichen Längsschlitz 16 des Ausgleichselements 6 angeordnet ist. Die Verschwenkbarkeit des Ausgleichselements 6 auf der Zugstange 5 wird durch eine Schlitzführung 17 (Fig. 1) erzielt.

Die Stellschraube 7 wird nach der Positionierung des Ausgleichselements 6 im Abstützteil 8 festgesetzt. Dieses ist im Querschnitt winkelförmig ausgeführt und weist einen ausgerundeten Abstützschenkel 18 und einen Auflageschenkel 19 für das Ausgleichselement 6 auf. In dem ausgerundeten Abstützschenkel 19 ist ein mit diesem korrespondierender ausgerundeter Rücken 20 des Ausgleichselements 6 verschwenkbar angeordnet.

Der zwischen der Gewindemutter 11 und dem Ausgleichselement 6 auf der Zugstange 5 gelagerte Bügel 10 mit den eingehängten Bremsseilen 2, 3 stützt sich am entsprechend der Seillängen positionierten Ausgleichselement 6 ab.

Der Bügel 10 ist im Querschnitt U-profilförmig ausgeführt und das Ausgleichselement 6 ist zwischen den Schenkeln dieses Profils angeordnet und stützt sich innenseitig des Bügels 10 mit seiner Abstützfläche A1 an der Abstützfläche A2 ab. Das heißt bei einer Schiefstellung des Ausgleichselements 6 nimmt der Bügel 10 ebenfalls eine entsprechende Schiefstellung wie das Ausgleichselement 6 ein.

Eine Kompensation von Toleranzen erfolgt vorzugsweise indem der Bügel 6 mit den eingehängten Bremsseilen 2 und 3 soweit verdreht wird, bis die Seilüberstände am anderen Ende gleichlang sind und durch ein Anziehen der Stellschraube 7 wird das Ausgleichselement 6 in seiner Position entsprechend dem Bügel 10 am Abstützteil 8 festgesetzt und die Seilnippel 22, 23 sind somit fixiert.

Durch ein Verdrehen der Gewindemutter 11 auf der Zugstange 5 wird der Bügel 10 mit samt den Seilnippeln 22, 23 vor- bzw. zurückgedreht. Damit verändert sich der Überstand am anderen Seilende. Das Federelement 12 preßt hierbei den Bügel 10 mittelbar über das Abstützteil 8 und das Ausgleichselement 6 gegen die Gewindemutter 11. Eine voreingestellte Schiefstellung bzw. Positionierung des Bügels 10 bleibt somit erhalten.

## Patentansprüche

1. Einstellvorrichtung für Radbremsseile einer Fußfeststellbremse umfassend eine Zugstange (5) und einen auf der Zugstange befestigten Bügel (10), in dem an jeder Seite ein Bremsseil einhängbar ist, **dadurch gekennzeichnet, daß** der Bügel (10) unter Zwischenschaltung eines verstellbaren Ausgleichselements (6) an einem Abstützteil (8) auf der Zugstange (5) über ein Federelement (12) abgestützt gehalten ist.

2. Einstellvorrichtung nach Anspruch 1, dadurch gekenzeichnet, daß das Ausgleichselement (6) über eine Stellschraube (7) in verschiedenen Schiefstellungen zum Abstützteil (8) festsetzbar ist und korrespondierend zu diesem Abstützteil (8) das Ausgleichselement (6) auf der Zugstange (5) verstellbar und über eine Gewindemutter (11) festsetzbar ist.

3. Einstellvorrichtung nach den Ansprüchen 1 oder 2, **dadurch gekennzeichnet, daß** die Stellschraube (7) in einen seitlichen Schlitz (16) des Ausgleichselements (6) angeordnet ist und dieses auf der Zugstange (5) gegenüber dem Abstützteil (8) begrenzt zu beiden Seiten der Zugstange (5) verschwenkbar ist.

4. Einstellvorrichtung nach den Ansprüchen 1, 2 oder 3, **dadurch gekennzeichnet, daß** das Ausgleichselement (6) einen ausgerundeten Rücken (20) aufweist, der in einer korrespondierenden bogenförmigen Ausrundung des Abstützteils (8) angeordnet ist.

5. Einstellvorrichtung nach den Ansprüchen 1, 2, 3 oder 4, **dadurch gekennzeichnet, daß** der Bügel (10) auf der Zugstange (5) mittels der Gewindemutter (11) gegen das Ausgleichselement (6) verspannbar ist, das eine dem Bügel (10) zugerichtete Abstützfläche (A1) aufweist, welche einer innenliegenden korrespondierende weitere Abstützfläche (A2) im Bügel (10) gegenübersteht.

6. Einstellvorrichtung nach einem oder mehreren der vorhergehenden Ansprüche, **dadurch gekennzeichnet, daß** das Federelement (12) aus einer Elastomerhülse besteht, welche zwischen einer sich an der Zugstange (5) abstützenden Anschlagscheibe (13) und dem Ausgleichselement (6) auf der Zugstange (5) angeordnet ist.

## Claims

1. An adjustment device for wheel-brake cables of a foot-operated parking brake, comprising a pull rod (5) and a yoke (10) which is fastened on the pull rod and in which a brake cable can be suspended on each side, **characterized in that** the yoke (10) is held supported on a support part (8) on the pull rod (5) by way of a spring element (12) with the interposition of an adjustable compensation element (6).

2. An adjustment device according to Claim 1, **characterized in that** the compensation element (6) can be fixed in various inclined positions with respect to the support part (8) by way of an adjustment screw (7), and the compensation element (6) can be adjusted on the pull rod (5) in a manner corresponding to the said support part (8) and can be fixed by way of a threaded nut (11).

3. An adjustment device according to Claims 1 or 2, **characterized in that** the adjustment screw (7) is arranged in a lateral slot (16) in the compensation element (6), and the said compensation element (6) is pivotable on the pull rod (5) in a restricted manner with respect to the support part (8) on both sides of the pull rod (5).

4. An adjustment device according to Claims 1, 2 or 3, **characterized in that** the compensation element (6) has a rounded back (20) which is arranged in a corresponding arcuate rounded portion of the support part (8).

5. An adjustment device according to Claims 1, 2, 3 or 4, **characterized in that** the yoke (10) can be clamped on the pull rod (5) against the compensation element (6) by means of the threaded nut (11), the compensation element (6) having a support face **(A1)** which is directed towards the yoke (10) and which is opposite a corresponding further support face **(A2)** situated on the inside in the yoke (10).

6. An adjustment device according to one or more of the preceding Claims, **characterized in that** the spring element (12) comprises an elastomer sleeve which is arranged on the pull rod (5) between a stop disc (13) supported on the pull rod (5) and the compensation element (6).

## Revendications

1. Dispositif de réglage pour câble d'un frein de roue d'un frein de stationnement à pied, comprenant une tige de traction (5) et un étrier (10) fixé sur la tige de traction dans lequel un câble de frein peut être accroché de chaque côté, **caractérisé en ce que** l'étrier (10) est maintenu soutenu, avec interposition d'un élément de compensation (6) réglable, contre une pièce d'appui (8) de la tige de traction (5), par l'intermédiaire d'un élément à ressort (12).

2. Dispositif de réglage selon la revendication 1, **caractérisé en ce que** l'élément de compensation (6) peut être bloqué par une vis de réglage (7) dans différentes positions obliques par rapport à la pièce d'appui (8), et en correspondance à cette pièce d'appui (8), l'élément de compensation (6) est déplaçable sur la tige de traction (5) et peut être bloqué par un écrou fileté (11).

3. Dispositif de réglage selon les revendications 1 ou 2, **caractérisé en ce que** la vis de réglage (7) est disposée dans une fente (16) latérale de l'élément de compensation (6) et peut pivoter sur la tige de traction (5), des deux côtés de celle-ci, de manière limitée par rapport à la pièce d'appui (8).

4. Dispositif de réglage selon les revendications 1, 2 ou 3, **caractérisé en ce que** l'élément de compensation (6) présente un dos (20) arrondi qui est disposé dans une partie arrondie correspondante en forme d'arc de la pièce d'appui (8).

5. Dispositif de réglage selon les revendications 1, 2, 3 ou 4, **caractérisé en ce que** l'étrier (10) peut être serré sur la tige de traction (5) au moyen de l'écrou fileté (11) contre l'élément de compensation (6) qui présente une surface d'appui (A1) tournée vers l'étrier (10), laquelle surface fait face à une autre surface d'appui (A2) correspondante située à l'intérieur, dans l'étrier (10).

6. Dispositif de réglage selon une ou plusieurs des revendications précédentes, **caractérisé en ce que** l'élément à ressort (12) est constitué d'un manchon en élastomère qui est disposé entre une rondelle de butée (13) prenant appui contre la tige de traction (5) et l'élément de compensation (6) sur la tige de traction (5).
